# EUROPEAN PATENT APPLICATION

(11) **EP 2 387 168 A2**
(43) Date of publication of application: **16.11.2011**
(21) Application number: 11165513.0
(22) Date of filing: 10.05.2011
(51) Int. Cl.: H04H 60/45, G06K 9/00

(54) **Techniques for person detection**

(30) Priority: 11.05.2010 US 777499
(71) Applicant: Intel Corporation, Santa Clara, CA 95052 (US)
(72) Inventor: Harrison, Beverly, Seattle, WA 98115 (US)
(74) Representative: Rummler, Felix

(57) **Abstract**

Techniques are disclosed that involve the detection of persons. For instance, embodiments may receive, from an image sensor, one or more images (e.g., thermal images, infrared images, visible light images, three dimensional images, etc.) of a detection space. Based at least on the one or more images, embodiments may detect the presence of person(s) in the detection space. Also, embodiments may determine one or more characteristics of such detected person(s). Exemplary characteristics include (but are not limited to) membership in one or more demographic categories and/or activities of such persons. Further, based at least on such person detection and characteristics determining, embodiments may control delivery of content to an output device.

## Description

### BACKGROUND

It is becoming increasingly important to automatically detect the presence of people in real world environments. Also, it is desirable to determine characteristics of detected persons. Such characteristics may include gender and age. Additionally, such characteristics may include activities performed by such persons (e.g., cooking, doing homework, walking between rooms, and so forth). However, the performance of such tasks is challenging. This is especially the case when there are multiple people in a particular locale, such as a household.

Currently, active and passive person detection techniques exist. These techniques involve deliberate user actions (e.g., logging in, swiping a finger over biometric reader, etc.). In contrast, passive person techniques do not involve such deliberate actions.

Current attempts in passive person detection typically use face recognition via high resolution camera systems or speaker identification via high fidelity audio. However, such current passive detection techniques raise privacy concerns. This is because these techniques collect information that can not only detect the existence of persons, but can also reveal the identity of particular persons.

Other drawbacks can exist with such current techniques. For instance, face recognition inaccuracies can result from changes in lighting or head position. Also, speaker identification inaccuracies can result from multi-person conversations, from distance to a microphone, background noise, and speech or sounds generated by nearby media sources. Thus, such passive person detection techniques can be failure prone.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:
**FIG. 1** is a diagram of an exemplary operational environment;
**FIG. 2** is a diagram of an exemplary implementation;
**FIG. 3** is a diagram of an exemplary implementation within an image processing module; and
**FIG. 4** is a logic flow diagram.

### DETAILED DESCRIPTION

Embodiments provide techniques that involve detecting the presence of persons. For instance, embodiments may receive, from an image sensor, one or more images (e.g., thermal images, infrared images, visible light images, three dimensional images, etc.) of a detection space. Based at least on the one or more images, embodiments may detect the presence of person(s) in the detection space. Also, embodiments may determine one or more characteristics of such detected person(s). Exemplary characteristics include (but are not limited to) membership in one or more demographic categories and/or activities of such persons. Further, based at least on such person detection and characteristics determining, embodiments may control delivery of content to an output device.

Such techniques may provide advantages over conventional approaches of collecting viewer data that rely upon phone or mailed surveys that are used to estimate viewers for a particular program (e.g., Nielsen ratings). Such conventional approaches can be highly inaccurate. Further, such conventional approaches do not provide indicators of more precise time-based viewing (e.g., advertisements within a program, and whether people leave the room or are present during the airing of particular segments).

Moreover, person detection techniques provided by embodiments have advantages over conventional sensor approaches, which can be very restrictive. Conventional approaches may involve having a person wear some form of battery operated tag that is then actively tracked via wireless radio signal. Other conventional approaches employ motion sensors that indicate when a person crosses through a path.

However, such motion sensor approaches do not determine traits of persons (e.g., memberships in demographic categories). Also, such motion sensor approaches may not detect whether a person is still in a room if he/she is motionless (e.g., sitting or standing still). These motion sensors may also be triggered by pets rather than people.

Yet other conventional approaches employ short range radio technologies (e.g., Bluetooth) to detect proximate devices such as cell phones, where these devices are assumed to be accurate proxies for their owners' presence (often not the case in homes where these handhelds get recharged).

Reference throughout this specification to "one embodiment" or "an embodiment" means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Operations for the embodiments may be further described with reference to the following figures and accompanying examples. Some of the figures may include a logic flow. Although such figures presented herein may include a particular logic flow, it can be appreciated that the logic flow merely provides an example of how the general functionality described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited to this context.

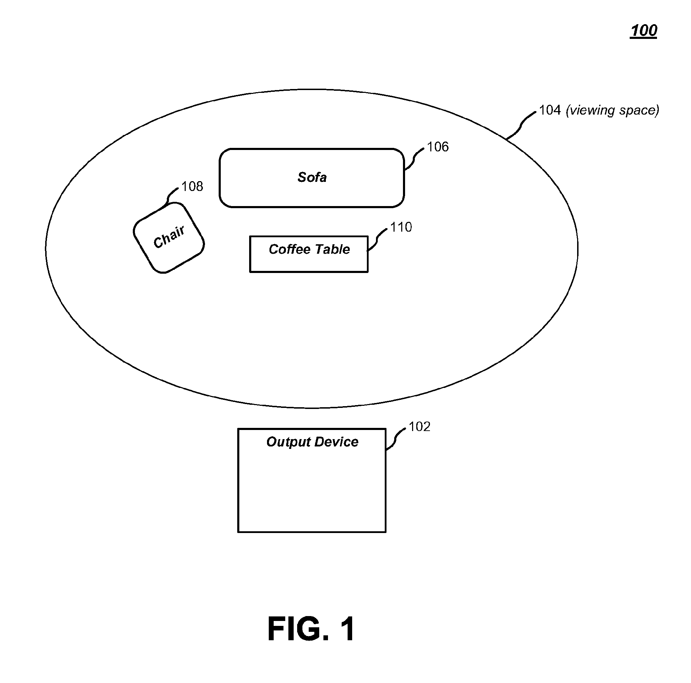

**FIG. 1** is a diagram showing an overhead view of an exemplary operational environment 100. Operational environment 100 may be in various locations. Exemplary locations include one or more rooms within a home, space(s) within a business or institution, and so forth.

As shown in **FIG. 1**, operational environment 100 includes an output device 102. Output device 102 may be of various device types that provide visual and/or audiovisual output to one or more users. For example, in embodiments, content output device 102 may be a television, a personal computer, or other suitable device.

**FIG. 1** shows a viewing space 104. Within viewing space 104, one or more persons are able to view content that is output by device 102. Various static objects exist within viewing space 104. In particular, **FIG. 1** shows a sofa 106, a chair 108, and a coffee table 110. These objects are shown for purposes of illustration, and not limitation. Persons may also be within viewing space 104. For example, within a period of time, one or more persons may enter and/or leave viewing space 104.

Thus, at any given moment in time, there may be any number of persons (zero or more persons) within viewing space 104. Moreover, each person may fit within various demographic categories (e.g., child, adult, female, male, etc.). Further, each of such persons may be engaged in various activities. Exemplary activities include viewing content output by device 102, walking through viewing space 104, exercising, and so forth.

Embodiments may determine the existence of person(s) within spaces, such as viewing space 104. Also, embodiments may determine one or more characteristics of such person(s). Such characteristic(s) may include membership in demographic categories and/or activities.

From such determinations, embodiments may control content that is output by a device (such as output device 102). This may include customizing or designating particular content for outputting (also referred to herein as content targeting), and/or blocking the output of particular content.

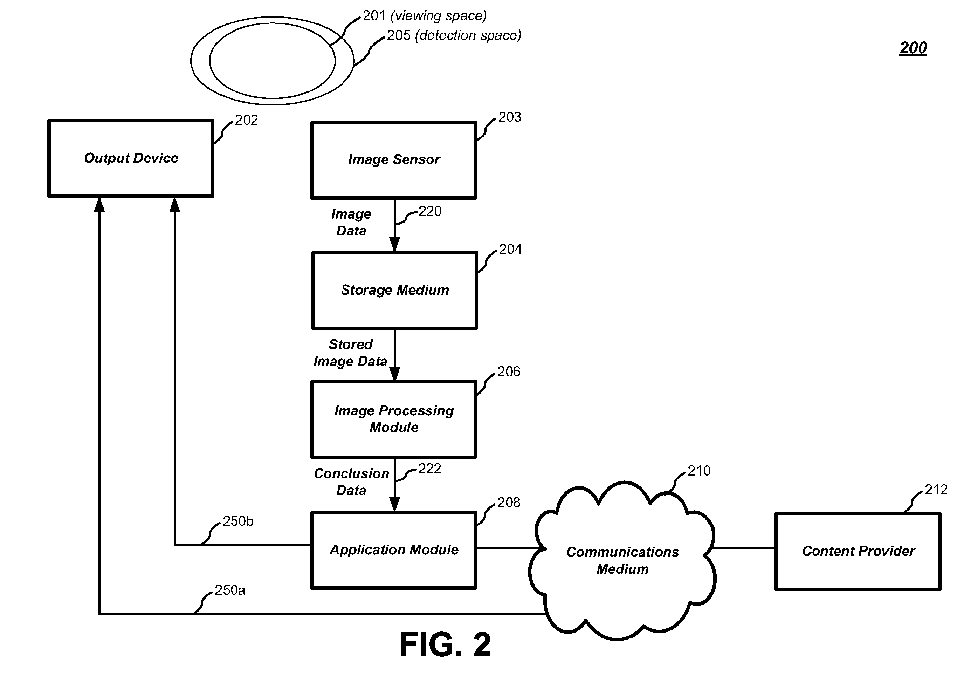

**FIG. 2** is a diagram of an exemplary implementation 200 that may be employed in embodiments. Implementation 200 may include various elements. For instance, **FIG. 2** shows implementation 200 including an output device 202, an image sensor 203, a storage medium 204, an image processing module 206, and an application module 208. These elements may be implemented in any combination of hardware and/or software.

Output device 202 outputs visual and/or audiovisual content. This content may be viewed by one or more persons within a viewing space 201. Viewing space 201 may be like or similar to viewing space 104 of **FIG. 1**. Embodiments, however, are not limited to this context. Examples of content outputted by output device 202 include video and/or graphics. Thus, in embodiments, output device 202 may be a television, a personal computer, or other suitable device.

Image sensor 203 generates images of a detection space 205. Detection space 205 may correspond to viewing space 201. For instance, detection space 205 may be a subset or superset of viewing space 201. As an example, **FIG. 2** shows detection space 205 encompassing viewing space 201. Embodiments, however, are not limited to this example.

Based on these images, image sensor 203 generates corresponding image data 220. In embodiments, image data 220 comprises multiple images. For instance, image data 220 may include a sequence of images collected at periodic intervals. As shown in **FIG. 2**, image data 220 is sent to storage medium 204.

Image sensor 203 may be implemented in various ways. For instance, image sensor 203 may be a thermal or infrared camera. Such a camera encodes heat variations in color data. In embodiments, an infrared camera may be employed that is sensitive enough to permeate walls. Employment of such a camera allows for detection space 205 to cover multiple rooms (and thus exceed the viewing space of output device 202). This feature may advantageously provide multi-room person localization with fewer cameras. As a result, more contextual data may be gathered for activity inference operations.

Alternatively, image sensor 203 may be a three dimensional (3D) imaging camera. Such a camera encodes depth differences for every pixel and visualizes these depth values as color data. As a further alternative, image sensor 203 may be a two dimensional (2D) visible light camera (often referred to as a RGB - red green blue - camera). However, embodiments are not limited to these examples. For instance, embodiments may employ various types of cameras or image sensors, in any number and combination.

Storage medium 204 stores image data 220 as one or more images for processing by image processing module 206. Storage medium 204 may be implemented in various ways. For example, storage medium 204 may include various types of memory, such as any combination of random access memory (RAM), flash memory, magnetic storage (e.g., disk drive), and so forth. Embodiments, however, are not limited to these examples.

Image processing module 206 performs various operations involving the images stored in storage medium 204. For instance, image processing module 206 may detect the existence of one or more persons (if any) that are within detection space 205. Also, image processing module 206 may determine characteristics of any such detected person(s).

In embodiments, the detection of persons may involve determining a background image, and subtracting the background image from a current image. This subtraction results in an analysis image. With this analysis image, various algorithms and/or operations may be performed to determine the existence of one or more persons. Details regarding such techniques are provided below.

In embodiments, image processing module 206 may determine a background image based on image data 220. This may involve identifying a period of time during which images within image data 220 are relatively static. From such a period, image processing module 206 may select a particular image as the background image. Alternatively, image processing module 206 may generate a background image based on one or more images within such a period.

Moreover, in embodiments, different background images may be employed over time. For instance, image processing module 206 may routinely determine a new background image. This may occur, for example, whenever there is an interval of time having relatively static images within image data 220. This feature advantageously provides for changes in lighting conditions, as well as for the rearrangement of objects (e.g., furniture) within detection space 205.

As described above, image processing module 206 may determine characteristics of any person(s) that it detects. For instance, image processing module 206 may determine whether detected person(s) (if any) are engaging in particular activities (e.g., walking, exercising, etc.). Such activity determinations may involve image processing module 206 determining motion characteristics of corresponding objects within multiple images covering an interval of time.

Additionally or alternatively, such characteristics determination(s) may involve image processing module 206 determining whether such detected person(s) belong to particular demographic categories (e.g., adult, child, male, female, etc.). This may entail image processing module 206 comparing shapes and sizes of detected persons to one or more templates. However, embodiments are not limited to such techniques.

As shown in **FIG. 2**, image processing module 206 provides conclusion data 222 to application module 208. Conclusion data 222 indicates results of person detection operations performed by image processing module 206. Also, conclusion data 222 may indicate results of characteristics determination operations (if any) performed by image processing module 206.

In embodiments, detection operations performed by image processing module 206 may involve statistical inferences (conclusions). Thus, likelihood probabilities may correspond to the detection (or lack of detection) of person(s) and/or the determination of characteristic(s). Such inferences and likelihood probabilities may be conveyed from image processing module 206 to application module 208 as conclusion data 222.

As described herein, content providers may originate content that is output by output device 202. As a non-limiting example, **FIG. 2** shows a content provider 212 that delivers content through a communications medium 210.

Based on conclusion data 222, application module 208 performs operations that affect the delivery of such content to output device 202. For instance, application module 208 may provide for targeting particular content to output device 202 and/or blocking the delivery of particular content to output device 202.

Embodiments may provide targeting and/or blocking in various ways. For instance, in an upstream content control approach, application module 208 may provide one or more content providers (e.g., content provider 212) with information regarding conclusion data 222. In turn, the content provider(s) may deliver or refrain from delivering particular content to output device 202 based at least on this information.

Additionally or alternatively, in a localized content control approach, application module 208 may perform delivery and/or blocking. In such cases, application module 208 may receive content from one or more content providers and determine whether to provide such content to output device 202.

With such a localized approach, application module 208 may provide output device 202 with such content in various ways. For instance, application module 208 may receive such content from content provider(s) and forward it "live" to output device 202. Alternatively, application module 208 may receive such content from content provider(s), and store it (e.g., within storage medium 204). In turn, application module 208 may access and deliver such stored content to output device 202 (e.g., at a later time) based at least on conclusion data 222.

In accordance with such approaches, **FIG. 2** shows content delivery paths 250a and 250b. Content delivery path 250a provides content directly from content provider 212 to output device 202. This path may be employed with the aforementioned upstream content control approaches. In contrast, content delivery path 250b provides application module 208 as an intermediary between content provider 212 and output device 202. This path may be employed with the aforementioned localized content control approach.

Communications medium 210 may include (but is not limited to) any combination of wired and/or wireless resources. For example, communications medium 210 may include resources provided by any combination of cable television networks, direct video broadcasting networks, satellite networks, cellular networks, wired telephony networks, wireless data networks, the Internet, and so forth.

Content provider 212 may include any entities that can provide content for consumption by user devices. Examples of content providers 212 include (but are not limited to) television broadcast stations, servers, peer-to-peer networking entities (e.g., peer devices), and so forth.

As described herein, the implementation of **FIG. 2** generates conclusion data 222 from image data 220. More particularly, image processing module 206 may detect the presence of person(s) and may determine characteristics of detected persons. In embodiments, image processing module 206 protects information regarding such persons by only providing conclusion data 222 to application module 208.

Moreover, in embodiments, certain elements (e.g., image processing module 206 and/or storage medium 204) may be implemented as a separate system on a chip (SOC) to make raw data (e.g., image data 220), as well as its intermediate processing results, unavailable to other processing entities. Such other processing entities may include (but are not limited to) any processor(s) and storage media that perform features of application module 208, including those belonging to the content provider 212.

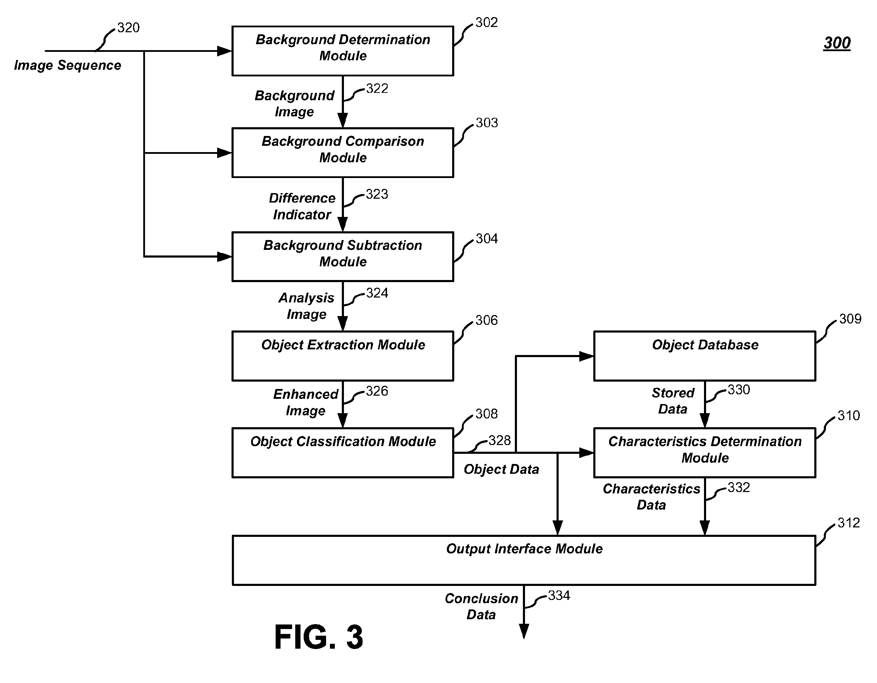

**FIG. 3** is a diagram showing an exemplary implementation 300 of image processing module 206. As shown in **FIG. 3**, implementation 300 includes a background determination module 302, a background comparison module 303, a background subtraction module 304, an object extraction module 306, an object classification module 308, an object database 309, a characteristics determination module 310, and an output interface module 312. These elements may be implemented in any combination of hardware and/or software.

As shown in **FIG. 3**, implementation 300 receives an image sequence 320. This sequence may be received from an image sensor (such as image sensor 203). Alternatively, this sequence may be received from a storage medium (such as storage medium 204). Image sequence 320 includes multiple images that are provided to background determination module 302.

From this sequence, background determination module 302 determines a background image 322. In embodiments, background determination module 302 may identify an interval of time during which images within image sequence 320 are relatively static. From such a time interval, background determination module 302 may select a particular image as background image 322. Alternatively, background determination module 302 may generate background image 322 based on one or more images within such a period.

Background comparison module 303 receives background image 322 and compares it to a current image within image sequence 320. If this comparison reveals that the current image and the background image are substantially similar, then it is concluded that no persons are detected in the current image. This comparison may be implemented in various ways.

However, if this comparison reveals that the current image and the background image are substantially different, then a difference is indicated (as shown by difference indicator 323). From this, background subtraction module 304 subtracts background image 322 from the current image. **FIG. 3** shows that this subtraction results in an analysis image 324, which is provided to object extraction module 306.

Object extraction module 306 performs various operations to enhance patterns within analysis image 324. Such operations may include (but are not limited to) performing color filtering and/or edge enhancement operations on analysis image 324. These operations produce an enhanced image 326, which is provided to object classification module 308.

Object classification module 308 identifies objects within enhanced image 326. This may involve the performance of shape matching operations that extract persons from non-person objects (e.g., throw pillows, etc.). Such shape matching operations may involve the comparison of objects within enhanced image 326 to predetermined object templates. In embodiments, such object templates may be stored in object database 309.

As a result of these operations, object classification module 308 generates object data 328. Object data 328 describes objects identified within analysis image 324. For instance, object data 328 may indicate extracted objects as being person(s), Also, object data 328 may provide further data regarding such objects, including (but not limited to) shape, size, and/or position. Additionally, object data 328 may include confidence margins (likelihood estimates) that inform the accuracy of these results. As shown in **FIG. 3**, object data 328 is sent to object database 309, characteristics determination module 310, and output interface module 312.

Upon receipt, object database 309 stores object data 328. Through this feature, object database 309 may provide information regarding particular objects over time. For example, such information may indicate an object's motion over time. In embodiments, object database 309 may include a storage medium. Exemplary storage media are described below.

Characteristics determination module 310 determines characteristics of detected persons. As described herein, characteristics may include a person's membership in one or more demographic categories. Also, such characteristics may include activities engaged in by such persons. These characteristics determinations may be based on object data 328 and/or stored data 330 that is accessed from object database 309. Also, the characteristics determinations may be based on parameter(s) and/or template(s) (which may be stored in object database 309). As a result, characteristics determination module 310 generates characteristics data 332, which is sent to output interface module 312.

Output interface module 312 generates conclusion data 334, which may indicate the detection of zero or more persons. Also, conclusion data 334 may indicate characteristic(s) of any detected persons. Further, conclusion data 334 may provide likelihood probabilities associated with such detections and characteristics. Thus, conclusion data 334 may be like conclusion data 222, as described above with reference to **FIG. 2****.**

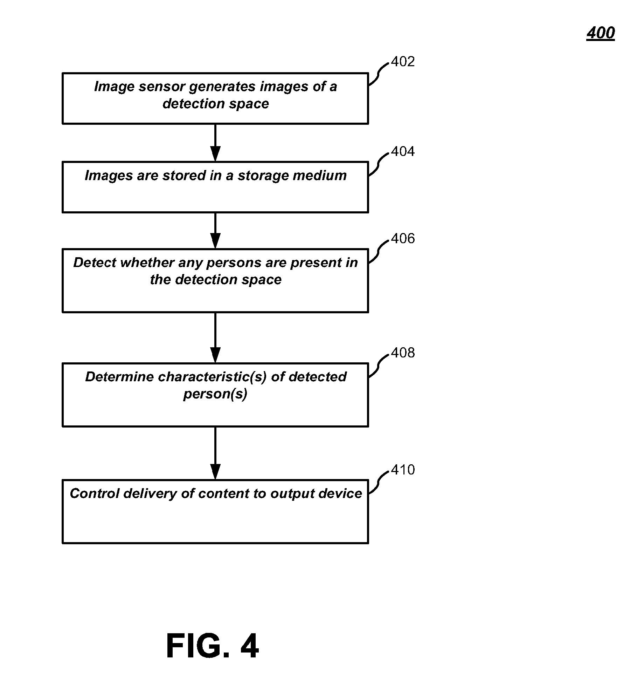

**FIG. 4** illustrates an exemplary logic flow 400, which may be representative of operations executed by one or more embodiments described herein. Thus, this flow may be employed in the contexts of **FIGs. 1-3****.** Embodiments, however, are not limited to these contexts. Also, although **FIG. 4** shows particular sequences, other sequences may be employed. Moreover, the depicted operations may be performed in various parallel and/or sequential combinations.

At a block 402, an image sensor generates a sequence of images. These image(s) are of a detection space. In embodiments, the detection space may correspond to a viewing space of an output device. An example of such correspondence is shown in **FIG. 2****.** Embodiments, however, are not limited to this example.

These images may be stored in a storage medium at a block 404. For example, in the context of **FIG. 2**, the images maybe stored in storage medium 204. Embodiments, however, are not limited to this example.

At a block 406, it is detected whether any persons are present in the detection space. This detection is based at least on the one or more images. For example, as described herein, block 406 may involve comparing a current image with a background image. The background image may be selected or generated from the one or more images

Based on any differences yielded by this comparison, block 406 may further involve various operations to extract object(s) and conclude whether they correspond to person(s). Such operations may include (but are not limited to) edge enhancement, template matching, and so forth.

At a block 408, one or more characteristics of any detected persons may be determined. Examples of characteristics include membership in one or more demographics categories, as well as various activities engaged in by such persons.

At a block 410, delivery of content to the output device is controlled. This controlling is based at least on the person detection performed at block 406. Also, this controlling may be based on the characteristic(s) determining performed at block 408. Such control may be performed according to local and/or upstream approaches.

As described herein, various embodiments may be implemented using hardware elements, software elements, or any combination thereof. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof.

Some embodiments may be implemented, for example, using a storage medium or article which is machine readable. The storage medium may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software.

As described herein, embodiments may include storage media or machine-readable articles. These may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magnetooptical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

While various embodiments of the present invention have been described above, it should be understood that they have been presented by way of example only, and not in limitation.

Accordingly, it will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method, comprising:
receiving one or more images from an image sensor, the one or more images of a detection space;
based at least on the one or more images, detecting the presence of a person in the detection space; and
determining a characteristic of the person.

2. The method of claim 1, further comprising:
controlling delivery of content to an output device based at least on said detecting and said determining.

3. The method of claim 2, wherein said controlling comprises targeting content to the output device.

4. The method of claim 2, wherein said controlling comprises blocking content from the output device.

5. The method of claim 2, wherein the detection space corresponds to a viewing space of the output device.

6. The method of claim 1, wherein said detecting comprises:
determining an analysis image based on a difference between an image of the one or more images and a background image; and
identifying an object in the analysis image, wherein the object indicates the person;
wherein the background image is based on at least one of the one or more received images.

7. The method of claim 1, wherein said determining the characteristic of the person comprises determining whether the person belongs in a demographic category.

8. The method of claim 1, wherein said determining the characteristic of the person comprises determining whether the person is engaged in a particular activity.

9. The method of claim 1, wherein the one or more images from the image sensor are three dimensional thermal images.

10. An apparatus, comprising:
an image sensor to generate one or more images of a detection space;
an image processing module to, based on the one or more images, detect whether any persons exist in the detection space;
an output device to display content; and
an application module to make one or more content determinations for the output device, wherein the one or more content determinations are based at least on said detection of whether any persons exist in the detection space.

11. The apparatus of claim 10, wherein the image processing module is to determine one or more characteristics of a detected person in the detection space.

12. The apparatus of claim 10, further comprising a content provider;
wherein the one or more content determinations comprises the content provider receiving information from the application module, and based on the information, determining whether to deliver particular content to the output device;
wherein the information indicates the presence of any persons in the detection space.

13. The apparatus of claim 10, wherein the information indicates one or more characteristics of a detected person in the detection space.

14. The apparatus of claim 10, wherein the one more content determinations comprises the application module receiving content from a content provider, and the application module determining whether to provide the received content to the output device.

15. An article comprising a machine-accessible medium having stored thereon instructions that, when executed by a machine, result in performance of the method of any one of claims 1-9.
